Europäisches Patentamt

European Patent Office

Office européen des brevets

(11) Numéro de publication: **0 352 154**
A1

## DEMANDE DE BREVET EUROPÉEN

(21) Numéro de dépôt: **89401819.1**

(22) Date de dépôt: **27.06.89**

(51) Int. Cl.5: **B 23 K 11/30**
B 23 K 11/36

(30) Priorité: **22.07.88 FR 8809915**

(43) Date de publication de la demande:
**24.01.90 Bulletin 90/04**

(84) Etats contractants désignés:
**DE ES FR GB IT SE**

(71) Demandeur: **REGIE NATIONALE DES USINES RENAULT
Boîte postale 103 8-10 avenue Emile Zola
F-92109 Boulogne-Billancourt (FR)**

(72) Inventeur: **Louis, Claude
65, rue de la Pièce du Parc
F-78960 Voisins-le-Bretonneux (FR)**

**Pralat, Jean-François
6, rue Heinrich
F-92100 Boulogne Billancourt (FR)**

**Saidi, Patrick
11, avenue Minerve
F-91170 Viry-Chatillon (FR)**

(74) Mandataire: **Kessler, Michel et al
R.N.U.R. - S. 0804 B.P.103 8 & 10, avenue Emile Zola
F-92109 Boulogne Billancourt (FR)**

(54) Pince de soudage asservie et son procédé d'utilisation.

(57) Pince de soudage asservie comportant un moteur électrique (1) du type sans collecteur qui entraîne une vis à rouleaux (2) liée aux deux bras de la pince, ce qui permet, grâce à des performances dynamiques et à des temps de réponse très faibles, de contrôler le point de soudure pendant son élaboration.
Application: notamment aux robots électriques.

EP 0 352 154 A1

Bundesdruckerei Berlin

## Description

### PINCE DE SOUDAGE ASSERVIE ET SON PROCEDE D'UTILISATION

La présente invention se rapporte à une pince de soudage asservie et à son procédé d'utilisation.

Les pinces de soudage, couramment utilisées sur les robots de soudage dans la construction automobile, fonctionnent grâce à un distributeur à tiroir qui agit par tout ou rien. Pour l'instant, il n'y a que deux positions possibles pour les mâchoires d'une pince : ou elles sont ouvertes ou elles sont fermées et ce sont deux positions invariables. En pratique, on envoie de l'air comprimé dans un surpresseur qui comprime de l'huile qui, à son tour, est envoyée dans le vérin pour le déplacer dans un sens ou dans l'autre et commander soit l'ouverture, soit la fermeture de la pince. Le temps de montée en pression à l'intérieure de vérin de commande est relativement long et, comme le système de contrôle de pression est peu précis, on n'est sûr qu'à 20 ou 30 % près que la bonne pression est établie, on ajoute une temporisation pour laisser la pression s'établir. Une électrovalve ouvre l'air comprimé pour déclencher la montée en pression de l'huile dans le surpresseur et ce n'est que 180 milliseconds après que l'on peut envoyer la soudure. Le contrôle s'effectue par tout ou rien par le fait qu'un relais se colle à partir d'une certaine valeur de pression d'huile et ce capteur de pression actuellement utilisé est peu satisfaisant car d'une précision insuffisante. Un bon capteur de pression coûte cher. Si l'on considère qu'une pince effectue jusqu'à quatre-vingts points de soudure par cycle, on voit que le robot, qui est équipé d'une telle pince, fonctionne finalement à un rythme assez lent, rythme ralenti par le temps perdu à l'ouverture et à la fermeture de la pince ainsi qu'à l'établissement de la pression.

En outre, une pince de soudage comprend essentiellement comme éléments actifs deux électrodes dont il convient de surveiller le degré d'usure pour savoir quand il devient opportun de les limer ou de les changer, sinon les électrodes se matent, la surface en contact avec la tôle augmente et le travail exécuté est de mauvaise qualité.

Dans la recherche d'un gain de temps, l'utilisation d'une pince classique de type oléopneumatique présente les inconvénients d'avoir des temps d'ouverture et de fermeture, des temps de montée en pression et de chute de pression trop importants.

L'optimisation des trajectoires de robot, la qualité du point de soudure, la réduction des chocs lors de l'accostage sur les tôles à souder ont conduit la demanderesse à créer, conformément au brevet français FR 2.464.781, des pinces à souder asservies en position et en effort. Elles sont de type hydraulique, la génération de puissance provenait de la centrale qui alimentait le robot hydraulique.

L'apparition des robots électriques a contraint d'embarquer une centrale hydraulique sur le robot pour alimenter la seule pince à souder.

La présente invention permet d'éviter les inconvénients précités avec une pince de soudage asservie du type comportant un dispositif d'entraînement d'un des bras de la pince par rapport à l'autre bras et utilisant un capteur de position pour déterminer à tout moment l'écartement de ses électrodes.

Suivant une particularité essentielle, un moteur électrique du type sans collecteurs entraîne une vis à rouleaux liée aux deux bras de la pince.

Il en résulte des performances dynamiques et de temps de réponse très faibles qui permettent un contrôle simple du point de soudure en cours d'élaboration.

Suivant une autre particularité, cette pince de soudage asservie est associée à un microcalculateur de pilotage.

Suivant une autre particularité, le microcalculateur comporte une mémoire qui contient la valeur d'écartement des électrodes de la pince et il compare en permanence cette valeur à celle lue et transmise par le capteur de position, si bien qu'il en déduit une valeur d'erreur et envoie une valeur de correction à un variateur pilotant ce moteur.

Suivant un second aspect, la présente invention concerne un procédé d'utilisation d'une pince de soudure asservie possédant tout ou partie des caractéristiques décrites ci-dessus, procédé remarquable en ce qu'il comporte un calage automatique du zéro d'ouverture des électrodes au début de chaque cycle de soudure.

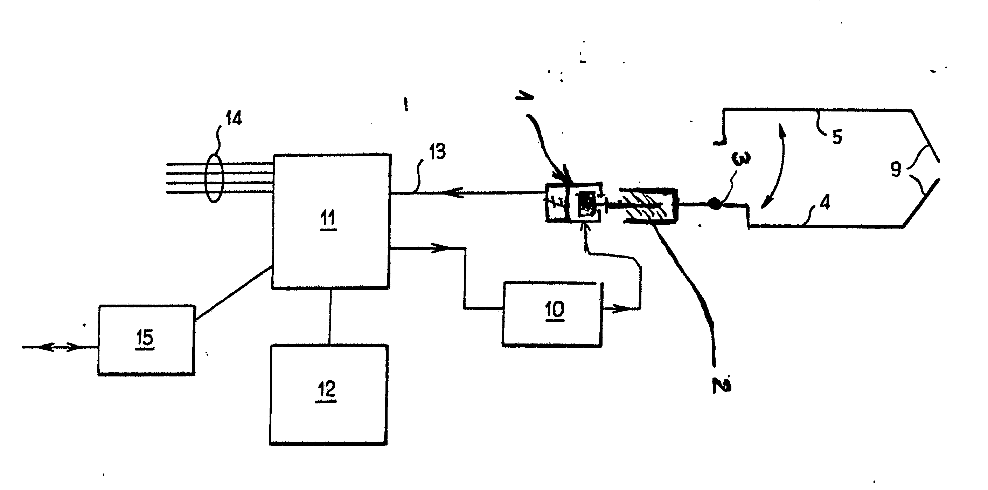

Avantageusement, le microcalculateur envoie l'ordre "demande soudure" à l'équipement électrique annexe ad hoc lorsqu'il constate la position "tôles serrées" des bras de la pince par l'intermédiaire du capteur de position. Avantageusement encore, le microcalculateur peut être équipé d'alarmes avertissant qu'un ragréage des électrodes 9 est nécessaire puis que l'état d'usure des électrodes nécessite leur changement. Ces avantages ressortiront de la description qui suit et qui n'est donnée qu'à titre d'exemple. A cet effet, on se reportera au dessin joint, illustrant a façon schématique un mode de réalisation non limitatif du dispositif suivant l'invention.

Suivant la représentation de la figure unique ci-jointe, une pince à souder asservie en position comprend par hypothèse un bras mobile 4 et un bras fixe 5. Le bras mobile 4 est entraîné en rotation autour de l'articulation 3 de la pince par la vis à rouleaux 2 actionnée par le moteur électrique 1.

Un capteur de position 7 donne en permanence la distance que font entre eux le bras mobile 4 et le bras fixe 5 de la pince. Suivent l'invention, le moteur électrique 1 est piloté dans les deux sens par un variateur 10 commandé par un microcalculateur 11 qui reçoit en permanence les informations fournies par le capteur de position 7 par un conducteur 13. Le microcalculateur 11 contient dans sa mémoire RAM 12 la valeur d'écartement des électrodes 9 de la pince à souder. Il compare cette valeur à celle lue et transmise par le capteur de position angulaire 7. Il en déduit une valeur d'erreur qui, multipliée par un gain K, donne la valeur du courant de correction qu'il envoie sur le variateur 10. Le chargement de la valeur d'écartement des électrodes 9 de la pince à souder dans la mémoire RAM 12 peut être effectué en parallèle par les entrées logiques 14 du microcalculateur 11. Il peut être également effectué en utilisant sa liaison série 15. Cette liaison série permet la communication avec un robot, une commande centralisée ou tout autre système disposant lui-même d'une liaison série.

En émettant un ordre "demande soudure", le microcalculateur commande l'ouverture de la servovalve 8, ce qui revient à alimenter le vérin 1 avec le débit maximal dans le sens de la fermeture de la pince. Les électrodes 9 de la pince se ferment pour atteindre une position définie, d'une part, par le contact entre les deux électrodes et, d'autre part, par la pression maximale sur le vérin. Lorsqu'un seuil de position est atteint et détecté par le microcalculateur 11 par l'intermédiaire du capteur de position 7, le microcalculateur envoie l'ordre de souder à un coffret de soudure. A la fin du cycle de soudure, le coffret répond au microcalculateur qui commande l'ouverture programmée de la pince.

Avant d'atteindre cette valeur, la pince passe par un second seuil de position qui est détecté par le microcalculateur. Ce dernier envoie alors un ordre qui peut commander le déplacement du robot ou de la machine sur lequel est installée la pince de soudure pour aller exécuter une autre soudure un peu plus loin et ainsi de suite de place en place.

Les électrodes de la pince à souder s'usent. La position zéro correspond au contact sous pression des électrodes au point que, dans cette position, les bras 4 et 5 de la pince à souder sont incurvés vers l'intérieur. Au fur et à mesure de l'usure, la position zéro va s'écarter de la position pince fermée. Pour remédier à cet inconvénient, une procédure de recalage automatique de la position zéro est programmée dans le microcalculateur 11. Avec le système illustré au dessin, la distance entre les électrodes 9 peut être réglée à la valeur minimale compatible avec les obstacles à éviter pendant le déplacement de la pince d'un point de soudure au suivant. Cette distance étant réglable à sa valeur minimale, le temps de fermeture de la pince jusqu'à ce que ses électrodes soient en contact et sont temps d'ouverture peuvent être minimaux. Le microcalculateur effectue une analyse permanente de l'ensemble du dispositif et peut en signaler les défauts. Il permet un rattrapage d'usure automatique des électrodes à chaque cycle robot machine et signale quand les électrodes 9 doivent être changées ou ragrées.

Enfin, les performances dynamiques propres à cette pince électrique de soudage permettent d'exercer un effort constant tout en contrôlant l'expansion du noyau du point de soudage, ce qui permet un contrôle de ce dernier en cours d'élaboration.

## Revendications

1. Pince de soudage asservie du type comportant un dispositif d'entraînement d'un des bras de la pince par rapport à l'autre bras, utilisant un capteur de position pour déterminer à tout moment l'écartement de ses électrodes, caractérisée en ce qu'un moteur électrique (1) du type sans collecteur entraîne une vis à rouleaux (2) liée aux deux bras de la pince, ce qui permet, grâce à des performances dynamiques et à des temps de réponse très faibles, de contrôler le point de soudure pendant son élaboration.

2. Pince de soudure suivant la revendication 1, dans laquelle une mémoire (12) contient la valeur d'écartement des électrodes (9) de la pince qui est comparée en permanence à la valeur mesurée et transmise par ce capteur de position (7), si bien qu'il en résulte une valeur d'erreur et l'envoi d'une valeur de correction à un variateur (10) pilotant ce moteur (1), caractérisé en ce que cette mémoire est associée à un microcalculateur (11, 12) de pilotage de cette pince.

3. Procédé d'utilisation d'une pince de soudage asservie suivant la revendication 1 ou 2, caractérisé en ce que l'on procède à un calage automatique du zéro d'ouverture des électrodes (9) au début de chaque cycle de soudure.

4. Procédé d'utilisation d'une pince de soudage asservie suivant la revendication 3, caractérisé en ce que le microcalculateur (11) envoie l'ordre "demande soudure" à l'équipement électrique annexe lorsqu'il constate une position "tôles serrées" des bras de la pince par l'intermédiaire du capteur de position (7).

5. Procédé d'utilisation d'une pince de soudage asservie suivant la revendication 3 ou 4, caractérisé en ce que le microcalculateur (11) est équipé d'alarmes avertissant qu'un ragréage des électrodes (9) est nécessaire puis que l'état d'usure de celles-ci nécessite un changement.

EP 0 352 154 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2585976 (ARO)<br>* page 3, lignes 16 – 28 *<br>* page 4, ligne 18 – page 5, ligne 10 *<br>* page 6, lignes 8 – 20; figures 2-4 *<br>--- | 1 | B23K11/30<br>B23K11/36 |
| A,D | FR-A-2464781 (RÉGIE NATIONALE DES USINES RENAULT)<br>* le document en entier *<br>----- | 1-5 | |

| | DOMAINES TECHNIQUES RECHERCHES (Int. Cl.5 ) |
|---|---|
| | B23K |

Le présent rapport a été établi pour toutes les revendications

| Lieu de la recherche | Date d'achèvement de la recherche | Examinateur |
|---|---|---|
| LA HAYE | 19 OCTOBRE 1989 | ARAN D.D. |